# EUROPEAN PATENT SPECIFICATION

(11) **EP 4 416 334 B1**
(45) Date of publication and mention of the grant of the patent: **04.02.2026**
(21) Application number: 22792835.5
(22) Date of filing: 11.10.2022
(51) Int. Cl.: D21H 19/00, D21H 27/10, D21J 3/00

(54) **A PRODUCT, USES OF THE SAME, AND A METHOD**
EIN PRODUKT, VERWENDUNGEN VON DESSELBEN, UND EIN VERFAHREN
UN PRODUIT, UTILISATIONS DUDIT PRODUIT ET UNE MÉTHODE

(30) Priority: 11.10.2021 FI 20216051
(43) Date of publication of application: 21.08.2024
(73) Proprietor: Metsä Spring Oy, 02100 Espoo (FI)
(72) Inventor: TUOMINEN, Jarkko, 02100 Espoo (FI); VÄNSKÄ, Emilia, 02100 Espoo (FI)
(74) Representative: Laine IP Oy
(86) International application number: PCT/FI2022/050677
(87) International publication number: WO 2023/062276

(56) References cited:
- WO-A1-2021/001779
- WO-A2-02/081818
- US-B1- 7 370 788

## Description

### FIELD

The present invention relates to coated fibrous structures, and more particularly to coated moulded fibrous structures comprising cellulosic and/or lignocellulosic fibres.

### BACKGROUND

Fibrous structures and products comprising cellulosic and/or lignocellulosic fibres are manufactured for example by wet-laid, air-laid or moulding methods. Such fibrous structures are widely employed in packaging technology, as an alternative to entirely plastic-based packages.

It is known to apply various coating films, such as barrier coatings, to packagings and containers made of cellulosic fibrous materials, such as paperboard. The purpose of such coating films is often to provide tailored or enhanced surface properties to the fibrous structure.

Application of a barrier coating typically needs to be carried out in a separate process after actual manufacturing of the fibrous substrate. For example, food containers and packagings are currently made of paper or paperboard comprising plastic or wax-based barrier coatings on food contact side of the container, such as laminated or extruded barrier coatings made of polyethylene terephthalate or polyethylene.

The known coating films suffer from many disadvantages related to adhesion of the coating film to the rest of the product, such as a fibrous product, and deterioration of the mechanical properties of the coating film during drying and converting steps in manufacturing or during moisture variation in transport and storage. For example, the coating may shrink in a different way as compared to the substrate on which the coating lies. Shrinking problems are especially pertinent in case of using bio-based water-diluted coating compositions.

Water-based coatings in general present many challenges and requirements to the fibrous substrate, such as structural problems upon re-wetting and need for re-drying. Another challenge is insufficient gas barrier level towards for example water vapour and oxygen.

It is challenging to prepare a smooth coating on a three-dimensional substrate or object by the known methods, and particularly to obtain an even distribution of the coating material on the sidewalls and bottom of the object.

Further, the known deep drawing moulding processes face challenges as the laminated or coated substrate should be mouldable by pressing and also flexible enough so that the coating would not crack in the process.

With the known coating methods, it is challenging to prepare a three-dimensional substrate with high barrier properties combined with good heat-sealability.

WO 02/081818 A2 discloses a process for forming a hydroxy-phenoxyether polymer modified articles coated with a polyester polymer comprising; impregnating or coating an article with a solution, dispersion, or extruded coating of a hydroxy-phenoxyether polymer; heating the article for a sufficient time and temperature to reduce the moisture content to the desired level; applying an aqueous dispersion of a water-dispersible polyester resin to at least one surface of the article; and heating said article to a temperature and for a time sufficient to at least partially cure said polyester and/or dry said aqueous dispersion of the polyester.

US 7370788 B1 discloses a molded article made predominantly of pulp and comprising a bottom portion and a body portion. The publication also discloses forming a plastic layer on the outer and/or the inner surfaces of a molded article by powder coating the outer and/or the inner surfaces of the molded article to form a plastic layer.

WO 2021/001779 A1 discloses a method for manufacturing modified cellulose fibers for a moldable cellulose fiber based web material, said method comprising:
a) providing a chemical or semi-chemical wood pulp comprising cellulose fibers, and optionally subjecting the pulp to alkaline extraction to obtain an alkaline extracted pulp; and b) subjecting the pulp or the alkaline extracted pulp of step a) to a chemical treatment with an alkaline solution and/or an organic solvent to obtain a treated pulp or treated alkaline extracted pulp comprising modified cellulose fibers for a moldable cellulose fiber based web material. The moldable cellulose fiber based web material may be polymer coated.

It is an aim of the present invention to solve at least some of the problems present in the known technology.

### SUMMARY OF THE INVENTION

The invention is defined by the features of the independent claims. Some specific embodiments are defined in the dependent claims.

According to a first aspect of the present invention, there is provided a product comprising: a fibrous structure comprising a cellulosic and/or lignocellulosic fibrous material and obtained by a moulding process; and a coating, such as at least one coating layer, on at least one surface of the fibrous structure, wherein the coating has been obtained by a powder coating process.

Various embodiments of the first aspect may comprise at least one feature from the following bulleted list:
- The coating forms an uppermost layer or a lowermost layer of the product.
- The product comprises at least two coating layers which are located on different surfaces of the fibrous structure, such as on opposite sides of a planar fibrous structure.
- The product further comprises a intermediate non-fibrous layer between said coating and the fibrous structure.
- The coating has been applied on a curved or a non-horizontal surface of the fibrous structure.
- The coating is a non-fibrous coating and comprises or consists of a thermoplastic polymer material or a thermoset polymer material, such as polyolefin, polyester, polyethylene terephthalate (PET), polyhydroxyalkanoate or polylactic acid.
- The coating comprises a non-fibrous layer which comprises or consists of a thermoplastic biodegradable polymer material.
- The coating comprises at least 80 wt-%, such as at least 90 wt-% of a thermoplastic polymer material or a thermoset polymer material.
- The coating comprises at least 20 wt-%, such as at least 60 wt-% of bio-based materials.
- The coating comprises less than 80 wt-%, such as less than 40 wt-% of fossil-based materials.
- The coating is a functional coating adapted to alter functional properties of the surface, such as barrier properties, visual properties, functional properties and/or haptic properties.
- The coating or a part of it is adapted to increase barrier properties of the surface of the fibrous structure, and the barrier properties include one or more of the following: oil and grease resistance, liquid resistance, water resistance, water vapour resistance, aroma resistance, gas resistance, oxygen resistance, flavour barrier.
- The coating is adapted to alter hardness, microscopic roughness, macroscopic roughness, friction properties, tactile properties or colour of the surface of the fibrous structure.
- The product has a dry grammage in the range of 5 to 900 g/m², for example in the range of 100 to 800 g/m², such as in the range of 200 to 600 g/m².
- The coating has a dry grammage in the range of 2 to 80 g/m², for example 10 to 35 g/m².
- The thickness of the coating is at least 1 µm, such as in the range 2 to 50 µm, for example 5 to 30 µm.
- The fibrous structure is substantially free from plastic materials and resin.
- The fibrous structure is a multi-layered fibrous structure and comprises at least a first fibrous layer and a second fibrous layer, each comprising a cellulosic and/or lignocellulosic fibrous material.
- The product further comprises between the first and the second fibrous layers one or more inner fibrous layers, each comprising a cellulosic and/or lignocellulosic fibrous material, preferably comprising mechanical pulp, such as CTMP or BCTMP and/or broke.
- The cellulosic and/or lignocellulosic fibrous material comprises one or more of the following: bleached or unbleached chemical pulp, semichemical pulp, mechanical pulp, thermomechanical pulp, chemithermomechanical pulp, bleached chemithermomechanical pulp, recycled cellulosic and/or lignocellulosic fibres, fibrillated cellulose, such as microfibrillated cellulose or nanofibrillated cellulose, nanocellulose, broke, cellulosic by-products, regenerated cellulosic fibres, and any other cellulosic material comprising cellulosic fibres or parts of cellulosic fibres, originating from any perennial or annual plants.
- The fibrous structure comprises at least 50 wt-% of a cellulosic and/or lignocellulosic fibrous material, calculated of the total dry matter.
- One or more of the fibrous layers or the entire fibrous structure has been obtained by foam forming, water forming, dip forming, vacuum forming, press forming, thermoforming, or dry forming, or any combinations thereof.
- The fibrous structure is a three-dimensional moulded fibrous structure, obtained by using a mould comprising at least one three-dimensional, non-planar mould surface, wherein said fibrous structure exhibits a three-dimensional shape conforming to the shape of said three-dimensional, non-planar mould surface.
- The product or a part of it has an overall shape adapted for holding a liquid or flowable material, such as an overall shape of a cup or a bowl.
- The fibrous structure is a multi-layered fibrous structure comprising at least two fibrous layers.
- All fibrous layers of the fibrous structure have been obtained by a foam forming method in a mould.

According to a second aspect of the present invention, there is provided use of the product according to the first aspect as a packaging or container for food, such as dairy, fish or meat products, or as a packaging for medicines or cosmetics, or as a part thereof.

According to a third aspect of the present invention, there is provided use of the product according to the first aspect for storing, handling, preparing or cooking food.

According to a fourth aspect of the present invention, there is provided a method comprising: providing at least one fibrous composition comprising cellulosic and/or lignocellulosic fibres and water; in a mould, forming a fibrous structure from said at least one fibrous composition; applying a coating on at least a part of a fibrous surface of the moulded fibrous structure by a powder coating process.

Various embodiments of the fourth aspect may comprise at least one feature from the following bulleted list:
- Said forming step comprises forming a three-dimensional fibrous structure from said at least one fibrous composition by using a three-dimensional mould.
- Said powder coating process comprises electrostatically applying a dry powder on said surface of the fibrous structure, and curing or melting the applied powder, preferably by contact or non-contact heating and/or hot-pressing, to form a film.
- The fibrous structure to be coated has a dry matter content of at least 90%, such as 90 to 96%.
- The fibrous structure to be coated has a dry matter content of at least 50%, such as at least 60%, such as at least 70%, for example 50 to 99%.
- The dry powder comprises pigments, binders and additionally one or more additives, which additives may be selected from the following group: resins and fillers, such as barite, silica, carbonates, silicates, aluminium hydroxide, and mixtures thereof.
- Said applying comprises spraying.
- Said curing or melting comprises contact or non-contact heating, hot-pressing, IR curing or microwave curing, or any combination thereof, preferably contact or non-contact heating to a temperature of at least 80 °C, for example at least 120 C°, such as at least 150 °C.
- Said curing or melting comprises contact or non-contact heating to a temperature of 80 to 300 °C, for example 120 to 250 °C.
- Said forming comprises water forming, foam forming, dip forming, vacuum forming, press forming, thermoforming, dry forming or any combinations thereof, preferably by foam forming.
- The method further comprises after said forming step and before applying the coating: dewatering the structure; hot-pressing the dewatered structure, to obtain the moulded three-dimensional fibrous structure, wherein said hot-pressing produces a surface that is directly suitable for being powder coated, for example powder painted.
- The fibrous structure to be coated has a dry matter content of at least 60%.
- After applying the coating, the coated fibrous structure is hot-pressed, such as hot-pressed for a second time.
- The density of the fibrous structure to be coated is at least 700 kg/m³.
- The fibrous structure is a multi-layered fibrous structure comprising at least two fibrous layers.
- Each fibrous layer of the fibrous structure is obtained by foam forming from a respective fibrous composition in a mould.

### Advantages of the invention

The present invention may facilitate preparation of smooth and even coating films on fibrous substrates, particularly three-dimensional fibrous substrates.

The present invention may facilitate obtaining a sufficiently smooth substrate for the purpose of preparing a successful and smooth coating on the substrate, for example by means of a dry coating process, such as a spraying process.

The present invention may provide fibrous products with improved surface properties, such as barrier, optical, visual and/or haptic properties.

Problems related to insufficient adhesion of the coating film, typically adhesion on a fibrous substrate, may be avoided.

Further, problems related to heat-sealability, such as insufficient adhesion on a fibrous substrate, may be avoided.

Powder painting may provide many benefits in comparison to wet painting processes. The powder painting composition that has been sprayed past the object to be painted may be collected and re-used, thus reducing waste and costs in comparison to wet painting processes. Once the powder painted objects have cooled down, they may be piled or packed against each other without any risk of adhering to each other. A powder painting process is quicker than a wet painting process. A powder painted surface is typically not susceptible of cracking upon impact or bending.

The present invention may facilitate use of bio-based raw materials in coatings or paints for moulded fibre products.

The present invention may enable film-forming of the dry coating, such as paint, by a variety of methods, such as by contact heating, heating in an oven, microwave heating or IR (infra-red) heating or any combination thereof.

The present method may avoid problems related to re-wetting of the fibrous substrate, and more generally the need to use water (i.e. the water consumption) may be reduced in comparison to the known water-based coating methods.

In the present method, a separate converting step may not be needed, as the coating may be prepared in a step that is integrated to an existing manufacturing line.

The present method, particularly powder painting, may enable bringing functional materials to the surface, such as heat insulating material.

The present method may enable preparing moulded fibre products with a patterned surface.

The present product may provide one or more of the following: high heat resistance, non-flammability, excellent shape followability or dimensional stability, strength, functional-material carrying property, acid resistance, improved flexibility, improved gas barrier properties, improved water vapour barrier properties, or grease- and/or water-resistance.

The present product may be suitable for indicative packaging or temperature-controlled packaging.

The present structures and products may be used in packaging, serving and storing and preparing any oil-containing and/or water-containing products, such as food or medicines or cosmetics.

### BRIEF DESCRIPTION OF THE DRAWINGS

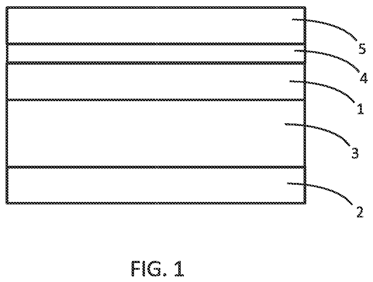

FIGURE 1 schematically illustrates a coated fibrous structure in accordance with at least some embodiments of the present invention.

### EMBODIMENTS

Unless otherwise stated herein or clear from the context, any percentages referred to herein are expressed as percent by weight based on a total dry weight of the respective composition.

Dry matter content of a composition is typically expressed as weight percentage based on total weight of the composition.

In the present context, 'dry coating' typically refers to any suitable coating method in which a coating material is applied or deposited in a dry state, for example as dry particles or dry powder or dry paint, on a surface.

In the present context, 'powder painting' typically refers to a coating method in which a substantially dry powder or dry paint is applied or deposited on a surface, typically by means of an electrostatic coating method.

In the present context, 'a coating' refers to a coating that may consist of one or more coating layers, which may have been formed in the same coating process or in different coating processes.

In the present context, 'resistant', such as water resistant, means that the material or layer resists penetration of the substance in question. In a preferred embodiment, the material or layer exhibits 'repellency', such as water repellency, which means that the substance in question cannot easily penetrate into the material or layer. In a more preferred embodiment, the material or layer exhibits 'proofness', such as waterproofness, which means that the substance in question cannot penetrate into the material or layer during typical use of a product comprising said material or layer. In other words, resistance to penetration of the substance in question increases in the order 'resistant' < 'repellent' < 'proof'.

Also in the present context, any reference to 'resistant' means 'at least resistant', i.e. the material or layer may also exhibit repellency and even proofness.

The present invention provides new moulded and coated fibrous products. At least part of the product may be manufactured by a foam-based process. Foam forming advantageously enables preparation of moulded multi-layer structures and tailoring of the properties of the individual layers.

According to the present invention, the product comprises: a fibrous structure comprising a cellulosic and/or lignocellulosic fibrous material and obtained by a moulding process; and a coating, such as at least one coating layer, on at least one surface of the fibrous structure, wherein the coating has been obtained by a powder coating process.

The coating may consist of a single coating layer or alternatively the coating may comprise several coating layers, such as 2 to 10 coating layers on top of each other.

The coating may form an uppermost exposed surface or layer or a lowermost exposed surface or layer of the product.

The coating may form an uppermost or lowermost, typically exposed non-fibrous layer of the product.

The product may comprise at least two coatings which are located on different surfaces of the fibrous structure, such as on opposite sides of a planar fibrous structure or on different sides of a three-dimensional structure. Each of the coatings may consist of one or more coating layers.

The product may comprise at least two coating layers which are located on different surfaces of the fibrous structure, such as on opposite sides of a planar fibrous structure or on different sides of a three-dimensional structure.

The product may also comprise a intermediate non-fibrous or fibrous layer, for example a primer layer or a flame pre-treatment layer, between said coating and the fibrous structure.

In an embodiment, the product may comprise a surface refinement layer between said coating and the fibrous structure.

The primer layer may be prepared by nanotechnology or microstructuring technology. For example, the primer layer may comprise microfibrillated cellulose (MFC) or nanofibrillated cellulose (NFC).

The product may comprise a further coating in addition to the coating according to the present invention. While the present coating is prepared by a powder coating process, an eventual further coating may be prepared by any means, for example by a wet coating process. The further coating may be located under or alternatively above the present coating that has been prepared by a powder coating process.

In one embodiment, a coating layer has been applied on a curved or a non-horizontal surface of the fibrous structure.

The coating or a part of it may comprise a thermoplastic polymer material or a thermoset polymer material.

Typically, the coating is a non-fibrous layer and comprises or consists of a thermoplastic polymer material or a thermoset polymer material, such as polyolefin, polyester, copolyester elastomer, polyethylene terephthalate (PET), nylon, polyhydroxyalkanoate or polylactic acid (PLA). The polyolefin may comprise polyethylene and/or polypropylene.

In some embodiments, the coating is a non-fibrous layer and comprises or consists of a thermoplastic biodegradable polymer material.

In some embodiments, the coating is a non-fibrous layer and comprises or consists of a thermoplastic bio-based or non-fossil-based polymer material.

In one embodiment, the coating layer comprises at least 50 wt-%, such as at least 80 wt-%, such as at least 90 wt-% of a thermoplastic polymer material or a thermoset polymer material.

The coating may comprise a functional layer adapted to alter functional properties of the surface, such as barrier properties, optical properties, visual properties and/or haptic properties.

The coating may be adapted to increase barrier properties of the surface of the fibrous structure. The barrier properties may include one or more of the following: oil and grease resistance, liquid resistance, water resistance, water vapour resistance, aroma resistance, gas resistance, oxygen resistance, flavour barrier.

For example, the coating may be adapted to alter hardness, microscopic roughness, macroscopic roughness or friction properties of the surface of the fibrous structure.

In some embodiments, the coating may be used for bringing visual and/or tactile effects to the surface such as colour, metallizing effects, colour swirls, waves, droplet-like elevations, crater-like cavities, streaks of varying transparency, or 3D effects for example for anti-counterfeit and security purposes.

In some embodiments, the coating provides surface properties such as artificial leather skin surface, slip-resistant surface or embossing effects.

In still further embodiments, the coating may provide a tactile finishing layer, or a layer the colour of which may be altered by electrical or other physical impulses, or a layer providing a visual impression of reflectivity or depth.

The product may have a dry grammage in the range of 5 to 900 g/m², for example in the range of 100 to 800 g/m², such as in the range of 200 to 600 g/m².

The coating may have a dry grammage in the range of 2 to 80 g/m², such as in the range of 2 to 35 g/m², for example in the range of 10 to 30 g/m².

In one embodiment, the thickness of the coating is at least 1 µm, such as in the range 2 to 20 µm, for example 5 to 10 µm.

The structure of the fibrous structure according to some embodiments is discussed in the following.

Preferably, the fibrous structure comprises at least 30 wt-%, for example at least 50 wt-%, such as 50 to 95 wt-% of a cellulosic and/or lignocellulosic fibrous material, calculated of the total dry matter.

Preferably, the fibrous structure is substantially free from plastic materials and resin.

The fibrous structure may be a single-layer fibrous structure.

Alternatively, the fibrous structure may be a multi-layered fibrous structure. The multi-layer fibrous structure may comprise at least two fibrous layers, for example a first fibrous layer and a second fibrous layer, each comprising a cellulosic and/or lignocellulosic fibrous material.

The product may further comprise between the first and the second fibrous layers one or more inner fibrous layers, each comprising a cellulosic and/or lignocellulosic fibrous material.

The fibrous compositions of the layers may differ from each other or alternatively be the same.

The fibrous structure to be coated, or the layer of the fibrous structure to be coated, may comprise additives, such as pigments and/or fillers, which are adapted to facilitate the powder coating process. For example, said additives may increase the moisture content, smoothness and/or surface energy of the structure or layer to be coated. The fibrous layer containing additives may have a basis weight in the range 30 to 600 g/m², such as 30 to 400 g/m².

By having a multi-layered fibrous structure it may be easier to tailor the compressibility of the structure, which may be advantageous in view of the powder coating process.

The cellulosic and/or lignocellulosic fibrous material may comprise one or more of the following: chemical wood pulp, semichemical wood pulp, mechanical wood pulp, thermomechanical wood pulp, chemithermomechanical wood pulp, bleached chemithermomechanical pulp, bleached semichemical pulp, groundwood pulp, pressure groundwood pulp, stone groundwood pulp, recycled cellulosic and/or lignocellulosic fibres, fibrillated cellulose, such as microfibrillated cellulose or nanofibrillated cellulose, nanocellulose, broke, cellulosic by-products, regenerated cellulosic fibres, and any other cellulosic and/or lignocellulosic material comprising cellulosic fibres or parts of cellulosic fibres.

The pulp may be bleached or unbleached or a mixture thereof.

The pulp may be refined or unrefined or a mixture thereof.

The chemical pulp may be from any chemical pulping process, such as sulphate process, sulphite process or organosolv process.

The chemical pulp may comprise bleached chemical pulp.

The mechanical pulp may be from any mechanical pulping process, such as mechanical pulp, thermomechanical pulp (TMP) chemithermomechanical pulp (CTMP), bleached chemithermomechanical pulp (BCTMP), semichemical pulp, groundwood pulp (GW), pressure groundwood pulp (PGW), stone groundwood pulp (SGW), and combinations thereof.

The broke may comprise trimming broke.

The cellulosic and/or lignocellulosic fibrous material may comprise non-wood pulp.

In one embodiment, the pulp may be made from any broad-leaved tree such as a tree from the betulaceae family, for example birch or aspen, from the salicaceae family, from eucalyptus, mixed tropical hardwood or pines or from any combination of the aforementioned. The pulp may be also made from any conifer such as spruce or pine or from any combination thereof. The pulp may be also made from a combination of broad-leaved trees and conifers.

In one embodiment, the pulp may be made from any annual such as straw, common reed, reed canary grass, bamboo, sugarcane, bagasse or any grass plant.

In one embodiment, the cellulosic and/or lignocellulosic fibrous material of the fibrous structure or a part of it comprises bleached hardwood chemical pulp and bleached chemithermomechanical pulp, such as 10 to 50 wt-% bleached hardwood chemical pulp and 50 to 90 wt-% bleached chemithermomechanical pulp, of total dry matter.

Typically, one or more surface layers of the product may comprise chemical pulp, such as bleached chemical pulp, for example bleached hardwood chemical pulp, for example bleached birch chemical pulp.

In one embodiment, one or more of the inner fibrous layers may comprise or consist of mechanical pulp, such as chemithermomechanical pulp (CTMP) or bleached chemithermomechanical pulp (BCTMP), and/or broke, for example 60 to 95 wt-% BCTMP and 5 to 40 wt-% broke, of the total dry matter.

In one embodiment, one or more of the inner fibrous layers may comprise or consist of mechanical pulp, such as chemithermomechanical pulp (CTMP) or bleached chemithermomechanical pulp (BCTMP). Preferably said inner fibrous layers are substantially free from broke.

In some embodiments, the cellulosic and/or lignocellulosic fibrous material comprises virgin wood pulp, such as virgin bleached chemical pulp that is substantially free from lignin, which may make the product particularly suitable for cooking, heating and safe food contact.

An advantage of virgin pulp is that it is free from residual ink and other undesired chemicals. Recycled waste materials often contain chemical and microbiological contaminants, which may affect their safe use. Mixtures of chemical compounds and microbial products may leach out from recycled materials and cause a variety of negative health or environmental impacts. Not only the harmfulness of individual chemical compounds, but also their interactions with other chemical compounds and microbial products may increase the toxicity of recycled materials and their emissions. Therefore, the present invention preferably avoids use of recycled materials.

An advantage of chemical pulp, such as bleached chemical pulp, is that it is substantially free from lignin. Lignin-containing pulps may be sensitive for ageing and yellowing of the material.

In some embodiments, the cellulosic and/or lignocellulosic fibrous material comprises lignin, for example in the form of lignocellulosic fibrous material, such as bleached or unbleached mechanical pulp. The present invention may benefit from the presence of lignin in the fibrous structure. As there is a coating layer above the fibrous structure, eventual lignin-containing fibrous material or layer are separated from the surroundings, for example from the food content in a packaging.

In one embodiment, the cellulosic and/or lignocellulosic fibrous material of the fibrous structure or a part of it comprises or consists of bleached softwood chemical pulp.

In one embodiment, the cellulosic and/or lignocellulosic fibrous material of the fibrous structure or a part of it comprises or consists of bleached hardwood chemical pulp.

In one embodiment, the cellulosic and/or lignocellulosic fibrous material of the fibrous structure or a part of it comprises or consists of a mixture of bleached softwood chemical pulp and bleached hardwood chemical pulp.

With regard to the manufacturing of a moulded fibrous structure or a part of it, any suitable moulding method may be applied, such as injection moulding, vacuum moulding, compression moulding, transfer moulding, extrusion moulding, blow moulding, dip moulding, rotational moulding, foam moulding, laminating, deep drawing, thermoforming, press forming, hydro-forming, suction forming, closed mould forming, open mould forming, dry forming or foam forming, or any combination thereof.

In the present context, the terms 'moulding' and 'forming' may be used interchangeably.

The moulding method may be supplemented by additional processes, such as various forming processes, for example in-mould drying, cold and hot pressing, calibration pressing, bending or shearing, or machining processes, for example turning, drilling, shaping, sharpening, heat sealing, printing or finishing, or cutting, or any combinations thereof.

In a preferred embodiment, one or more of the fibrous layers of the fibrous structure, or the entire fibrous structure has been obtained by either foam forming or water forming or wet forming in a mould, preferably by foam forming in a mould.

Preferably, all fibrous layers of the product have been obtained by foam forming in a mould.

The fibrous structure may be a three-dimensional moulded fibrous structure, obtained by using a mould comprising at least one three-dimensional, non-planar mould surface. In this case the fibrous structure exhibits a three-dimensional shape conforming to the shape of said three-dimensional, non-planar mould surface.

The product or a part of it may have an overall shape adapted for holding a liquid or flowable material, such as an overall shape of a cup or a bowl.

In one embodiment, the oil and grease resistance OGR of the product is measured by ASTM F119, with olive oil at 60 °C, and is in the level 'moderate' or better, such as more than 10 min, typically 10 min to 6 h, in one example more than 3 h.

In one embodiment, the oil and grease resistance OGR of the product is measured by ASTM F119, with olive oil at 60 °C, and is in the level 'medium' or better, such as more than 6 h, typically 6 to 72 h, in one example more than three days.

In one embodiment, the moisture resistance of the product is measured by ISO 2528 and ASTM E96, at standard conditions 23 °C and 50% RH, and is in the level 'moderate' or better, such as less than 250 g/m²/d, typically 100 to 250 g/m²/d, in one example less than 150 g/m²/d.

In one embodiment, the moisture resistance of the product is measured by ISO 2528 and ASTM E96, at standard conditions 23 °C and 50% RH, and the water vapour transmission rate is in the level 'good' or better, such as less than 100 g/m²/d, typically 10 to 50 g/m²/d, in one example less than 30 g/m²/d.

The present invention may enable obtaining good gas barrier properties, for example suitable for packaging of chilled food. In an embodiment, the oxygen transmission rate of the product is measured by ASTM D-3985, at standard conditions 23 °C and 50% RH, and is in the level 'good' or better, such as less than 100 cm³/m²/d, typically in the range 50 to 100 cm³/m²/d, or less than 50 cm³/m²/d.

Chilled food typically necessitates a high oxygen barrier, such as 40 to 60 cm³/m²/d. Chilled food usually necessitates a water vapour barrier of 1 to 1.5 g/m²/d.

In one embodiment, the water absorption on coated side or surface of the product is measured by ISO 535, Cobb value after 5 min, and is in the level 'moderate' or better, such as less than 100 g/m², typically 50 to 100 g/m², in one example less than 75 g/m².

In one embodiment, the water absorption on coated side or surface of the product is measured by ISO 535, Cobb value after 5 min, and is in the level 'medium' or better, such as less than 50 g/m², typically 5 to 50 g/m², in one example less than 15 g/m².

The density of the fibrous structure to be coated is in the range 300 to 1 000 kg/m³, such as 350 to 800 kg/m³, for example 450 to 700 kg/m³, such as larger than 500 kg/m³, calculated as dry solids weight per volume.

In an embodiment, the density of the fibrous structure to be coated is in the range 700 to 1 000 kg/m³, such as 750 to 950 kg/m³, for example 775 to 900 kg/m³, such as larger than 800 kg/m³, calculated as dry solids weight per volume.

In some embodiments, the density of the fibrous structure may be relatively low, such as less than 500 kg/m³, as the presence of a powder coated layer may provide a dense, closed structure or surface layer above the fibrous structure.

In some embodiments, the density of the fibrous structure may be less than 800 kg/m³, such as less than 700 kg/m³, such as less than 600 kg/m³.

The surface smoothness of the fibrous structure to be coated is in the range 50 to 3000 ml/min, such as 100 to 1000 ml/min, for example 150 to 600 ml/min, measured by ISO 8791-2 Bendtsen method. An advantage of having a smooth surface is that the powder coating, for example by a spraying method, is facilitated.

In an embodiment, the surface smoothness of the fibrous structure to be coated is in the range 50 to 250 ml/min, measured by ISO 8791-2 Bendtsen method. Preferably the surface smoothness of the fibrous structure to be coated is less than 400 ml/min. An advantage of having a smooth surface is that the powder coating, for example by a spraying method, is facilitated.

The fibrous structure to be coated or a part of it, such as a fibrous layer of the fibrous structure, may comprise one or more additives or additive chemicals. In one embodiment, at least a surface layer to be coated or a surface part to be coated of the fibrous structure comprises one or more additive chemicals.

The fibrous structure to be coated or a part of it, such as a fibrous layer of the fibrous structure, may comprise one or more of the following additives: pigments, such as talc, clay, calcium carbonate, and metal salt pigments, for example aluminium trihydrate, gypsum, silicates, silica compounds, and titanium dioxide; barrier agents; latex binders; water-soluble binders, such as PVA (polyvinyl alcohol), starch, and CMC (carboxymethyl cellulose); sizes, such as AKD (alkyl ketene dimer or alkenyl ketene dimer), ASA (alkenyl succinic anhydride) and resins; strength agents, such as CMC, MFC (microfibrillated cellulose) and NFC (nanofibrillated cellulose).

In one embodiment, the additives comprise strength agents, such as CMC (carboxymethyl cellulose), MFC (microfibrillated cellulose), NFC (nanofibrillated cellulose), or any combination thereof.

In one embodiment, the additives comprise additives, such as pigments, which are capable of increasing smoothness of the surface to be coated.

In one embodiment, the surface to be coated is made more hydrophobic by incorporating suitable additives, such as hydrophobization agents, to the fibrous structure or a surface thereof, such as surface size agents, for example alkyl ketene dimer (AKD) and/or starch.

In one embodiment, the surface to be coated is made more hydrophilic by incorporating suitable additives, such as hydrophilization agents, to the fibrous structure or a surface thereof.

The amount of the additives may be in the range 0.01 to 30 wt-%, such as 0.01 to 10 wt-%, such as 0.1 to 8 wt-%, for example 1 to 5 wt-%, calculated from the total dry matter.

In an embodiment, the amount of the additives may be in the range 0.01 to 40 wt-%, calculated from the total dry matter.

Additives or chemicals may be added to the fibrous furnish or slush before the forming step, preferably the foam forming step, at a consistency of for example 0.5 to 15%, such as 0.8 to 10%, such as 2 to 10%, or alternatively, before forming, preferably before foam forming, for example to the foam to be mixed with the fibrous slush.

In one embodiment, the fibrous structure or at least one of the fibrous layers thereof comprises 0.1 to 5 wt-% talc.

In one embodiment, the fibrous structure or at least one of the fibrous layers thereof comprises 0.1 to 5 wt-% clay.

In one embodiment, the fibrous structure or at least one of the fibrous layers thereof comprises 0.1 to 5 wt-% calcium carbonate.

In one embodiment, the fibrous structure or at least one of the fibrous layers thereof comprises barrier agents selected from the following group: dispersion polymers, polyolefins, polyesters, other thermoplastic polymers, biodegradable polymers, such as polylactic acid, starch and its derivatives, plastomers, elastomers, ethylene vinyl alcohol, and any derivatives, co-polymers and mixtures thereof.

In one embodiment, the fibrous structure or at least one of the fibrous layers thereof comprises 0.1 to 10 wt-%, such as 0.1 to 5 wt-% barrier agents, such as dispersion polymer barrier agents. Such barrier agents typically provide barrier properties throughout the structure of the fibrous structure or the fibrous layer.

In one embodiment, the fibrous structure or at least one of the fibrous layers thereof comprises 0.1 to 5 wt-% polymeric latex binders, such as styrene butadiene latex, styrene acrylate latex, polyvinyl acetate latex.

In one embodiment, the fibrous structure or at least one of the fibrous layers thereof comprises 0.1 to 5 wt-% polyvinyl alcohol (PVA).

In one embodiment, the fibrous structure or at least one of the fibrous layers thereof comprises 0.1 to 20 wt-%, such as 0.1 to 5 wt-% starch.

The starch may be native, cooked or swelled cationic starch.

In one embodiment, the fibrous structure or at least one of the fibrous layers thereof comprises 0.1 to 5 wt-% carboxymethylated cellulose (CMC).

In one embodiment, the fibrous structure or at least one of the fibrous layers thereof comprises 0.1 to 20 wt-% mineral fillers.

In one embodiment, the fibrous structure or at least one of the fibrous layers thereof comprises 0.1 to 20 wt-% pigments, of total dry matter. Preferably, a surface layer or surface part to be coated comprises 0.1 to 20 wt-% pigments.

In one embodiment, the fibrous structure or at least one of the fibrous layers thereof comprises 0.1 to 20 wt-% strengthening additives, such as microcrystalline cellulose (MCC), nanocellulose or other strengthening cellulose.

In one embodiment, the fibrous structure or at least one of the fibrous layers thereof comprises strengthening additives, such as microfibrillated cellulose (MFC), nanofibrillated cellulose (NFC) or other strengthening cellulose or any combination thereof.

In one embodiment, the amount of the strengthening additives is 0.1 to 20 wt-%.

Preferably, the fibrous structure or at least one of the fibrous layers thereof comprises less than 10 wt-%, such as less than 5 wt-%, such as less than 2 wt-% of waxes, plastics and fluorochemicals. In one embodiment, the fibrous structure or at least one of the fibrous layers thereof comprises less than 2 wt-% of waxes. In one embodiment, the fibrous structure or at least one of the fibrous layers thereof comprises less than 2 wt-%, such as less than 1 wt-% of plastics. In one embodiment, the fibrous structure or at least one of the fibrous layers thereof comprise less than 2 wt-%, such as less than 1 wt-% of fluorochemicals.

In some embodiments, the product is substantially free of waxes, plastics and fluorochemicals, particularly plastics.

For products intended for food packaging applications, the additives and the foaming chemicals may be selected among all additives that are approved for use in food contact materials or packagings. By 'food contact materials' it is referred to all materials and articles intended to come into contact with food, such as packaging and containers.

The amount of the barrier additive in the fibrous structure or in a part of it may be in the range 1 to 10 wt-%, such as 5 to 8 wt-%, calculated from the total dry weight of the fibrous layer.

In some embodiments, the coating or a part of it may impart first-type of barrier properties, and the fibrous structure below it may impart second-type of barrier properties which differ from the first-type of barrier properties. For example, the coating or a part of it may impart water barrier properties, and the fibrous structure may impart oil and/or grease barrier properties.

In some embodiments, the coating or a part of it may enhance the barrier properties, such as oil and/or grease barrier properties which are provided by the fibrous structure below it.

In case the product comprises a further coating either under or above the coating that has been prepared by a powder coating process, said further coating may also impart barrier properties. For example the coating prepared by a powder coating process may impart oxygen barrier properties while a further coating prepared by a wet coating process may impart different barrier properties, such as water barrier properties.

The present coated structure may be used in food contact materials and articles.

In one embodiment the present product complies with Regulation (EC) No 1935/2004.

In addition to or instead of food contact uses, many other application areas can be envisioned for the present structures and products.

In one embodiment, at least one of the fibrous layers comprises a size, such as modified rosins, waxes, oils, or polymers. An advantage of using a size is that undesired absorption of liquid and/or water and/or moisture into the foam formed structure may be reduced. Thus, moisture-resistance or water-resistance of the product is improved.

An example of a wax is alkyl ketene dimer (AKD). An example of an oil is alkenyl succinic anhydride (ASA). An example of a polymeric size is styrene acrylate emulsion (SAE).

A preferred size is AKD or a similar wax.

The sizes applicable in some embodiments of the present invention may be a cationic surface size or an anionic surface size, such as a rosin-based size. In addition to or as an alternative to these, some reactive sizes, such as alkyl ketene dimer (AKD), may be used as a surface size.

Suitable cationic sizes include cationic starches and starch derivatives as well as corresponding carbohydrate-based natural polymers. Of synthetic polymers, for example styrene/acrylate copolymers (SA), polyvinyl alcohols, polyurethanes and alkylated urethanes may be used.

Suitable anionic sizes may include anionic starches and starch derivatives and corresponding carbohydrate-based natural polymers such as carboxymethyl cellulose and its salts, alkyl celluloses such as methyl cellulose and ethyl cellulose. Synthetic polymers may include: styrene / maleic acid copolymer (SMA), diisobutylene / maleic anhydride, styrene acrylate copolymers, acrylonitrile / acrylate copolymers, and polyurethanes and similar latex products containing the same chemical functionalities.

In one embodiment, the size comprises alkyl ketene dimer (AKD).

In one embodiment, the additives, such as pigments, binders, and sizes are compliant with ovenable products.

In some embodiments, the product or the fibrous structure may comprise only one fibrous layer.

In some embodiments, the product may comprise 1 to 20 fibrous layers, such as at least two fibrous layers, such as at least three fibrous layers.

In some embodiments, the product comprises an intermediate layer, such as a pre-coating layer, between the coating and the fibrous structure.

The intermediate layer may comprise or consist of MFC, PVA, CMC, starch, talc or combinations thereof.

An advantage of using an intermediate layer between the coating and the fibrous structure is that adhesion and functionality of the coating may be improved.

The present method enables obtaining a smooth surface in the fibrous structure to be coated, which facilitates application or attachment of the coating, particularly a powder-painted layer on the fibrous structure.

The coating and the optional intermediate layers are all typically applied after the forming stage, preferably after the hot-pressing stage.

One or more intermediate layers may be prepared before a hot pressing step, for example already in a forming or moulding step.

In one embodiment, the coating is applied before any hot pressing or between two hot-pressing stages. Thus, during the hot-pressing, the coating layer forms a film, typically a smooth and continuous film, as a result of the applied heat. Thus, the heat melts the powder coating and converts it to a film. In this way it may be possible to prepare embossed structures or other textured structures to the exposed surface of the coating, which typically forms the outermost surface of the product.

The hot pressing stage, which may comprise at least two hot pressing steps, may provide a smooth outer surface to the final product. Preferably, all outer or exposed surfaces of the final product may become smooth.

For example, a first hot-pressing step may remove water that originates from the forming step, and a subsequent, second hot-pressing step may produce a film structure from the applied powder coating.

FIGURE 1 schematically illustrates a coated fibrous structure in accordance with at least some embodiments of the present invention. The structure comprises a first fibrous layer 1, a second fibrous layer 2, and an inner fibrous layer 3 between the first fibrous layer 1 and the second fibrous layer 2. Additionally, the structure comprises, on top of the first fibrous layer, an intermediate layer 4, and a coating 5. In other embodiments, the intermediate layer 4 may be absent. In some embodiments, the structure may comprise a second coating (not shown) on the opposite side of the fibrous layers, under the second fibrous layer 2. An intermediate layer may be applied between such a second coating and the second fibrous layer 2 in the similar way as between the (first) coating 5 and the first fibrous layer 1.

In another embodiment, the product comprises only one fibrous layer, such as the first fibrous layer 1, a coating 5, and optionally an intermediate layer 4.

In yet another embodiment, the product does not comprise any intermediate layer.

In some embodiments, the product comprises no inner fibrous layers. In other embodiments, the product comprises one, two or three inner fibrous layers between the first fibrous layer 1 and the second fibrous layer 2.

The multi-layered fibrous structure is preferably obtained so that all fibres to be included in the end structure, typically the fibrous structure to be coated, undergo a foam forming process.

The advantage of foam forming is that lighter and bulkier product may be prepared. Additionally, a more homogeneous forming may be achieved. Use of foam enables facile preparation of multi-layered fibrous structures in a batch process, i.e. all fibrous layers may be formed in the same mould to form a multi-layered stack in the mould, which stack is then hot-pressed.

An advantage of dewatering the entire multilayer fibrous structure in the same mould is that inter-layer bonding may be enhanced also during the dewatering in comparison to dewatering the layers individually.

In some embodiments, in addition to foam-formed layers, the end product may further comprise water-formed layers as part of the fibrous structure. Such water-formed layer or layers may be formed in a separate process and combined with the foam-formed layer or the foam-formed multi-layered structure by hot-pressing. An advantage of water forming is that preparation of flat or planar structures is easy. In water-forming methods, the individual fibrous layers are typically formed and removed from the mould independently from each other. Separate moulds may be used. After being removed from the mould(s), the fibrous layers may be piled to a stack and joined to each other and/or to other layers by hot-pressing.

In one embodiment, the fibrous structure comprises several fibrous layers that have been prepared by water-forming processes and combined to each other and optionally additionally to at least one foam-formed fibrous layer, to form the fibrous structure to be coated.

In some embodiments, the fibrous structure may be formed solely by water-forming methods.

In one embodiment, the fibrous structure comprises one or more inner fibrous layers that have been prepared by a foam forming process.

In one embodiment, the entire fibrous structure has been prepared by a foam forming process.

Preferably the fibrous structure is a three-dimensional moulded multi-layered fibrous structure, obtained by using a mould comprising at least one three-dimensional, non-planar mould surface, wherein said fibrous structure exhibits a three-dimensional shape conforming to the shape of said three-dimensional, non-planar mould surface.

For example, the product may have a shape of a cup, a plate, a bowl, a pan, a clam-shell or a tray.

Typically, the product is a food or liquid packaging or container or a food or liquid serving product, such as a cup for beverage or a food tray or plate .

The product may be used for packaging, storing, cooking and/or heating of food or liquid or beverage. Examples include frozen food packages intended for being heated, yogurt packages, and trays for fresh meat or fish.

For example, the product may be used for packaging of various industrial products, such as food products, for packaging trays for cold cuts of meat, fish, cheese and other sliced food, for storage and transport of items such as food, beverage, medicines, cosmetics, and moisture and oxygen sensitive materials.

In some embodiments, the product may be used as a heat-resistant cushioning material or a heat-resistant shield material.

More generally, the product may be used for packaging and storing any oil-containing and/or water-containing products.

In one example, the product is a packaging for cosmetics.

In one example, the product is a packaging for medicines.

The product may be used as a food or liquid packaging or as a food or liquid serving product or as a baking product or as a part thereof.

Next, we describe manufacturing of a powder coated fibrous structure according to some embodiments.

The method comprises providing at least one fibrous composition comprising cellulosic and/or lignocellulosic fibres and water. In a mould, a fibrous structure is formed from said at least one fibrous composition. Thereafter, a coating layer is applied on at least a part of a surface of the moulded fibrous structure. Said coating layer is applied by a powder coating process.

Preferably, said forming step comprises forming a three-dimensional fibrous structure from said at least one fibrous composition by using a three-dimensional mould.

Said powder coating process may comprise electrostatically applying a dry composition, for example a dry powder, such as a powder paint, on said surface of the fibrous structure, and curing or melting or film-forming the applied powder, preferably by heating.

The applying of the dry composition, such as a thermoplastic powder coating composition, may be carried out by using an electrostatic spraying device or by any other suitable means or method, for example by fluidized bed coating or by using a mini coater.

The dry composition, such as a powder paint, may comprise particles which typically have an average particle size in the range 2 to 50 µm.

In some embodiments, the powder paint has a softening temperature T_{g} in the range 70 to 90 °C, a melting temperature in the range 120 to 180 °C, and typically is cured in a temperature of 180 to 220 °C.

In some embodiments, the dry composition, such as a powder paint, is cured in a temperature of 180 to 240 °C.

Advantageously, the coating comprises a thermoplastic powder coating, which may only require enough heat and time to melt the powder into a smooth, continuous film.

Properties, such as adhesion, lubricity of the coating, flexibility and elongation of the coating, and many more may be optimized for a given application. For thermoplastic coatings, the powder may exhibit these properties inherently without requiring further curing or crosslinking once applied on an object or surface.

In one embodiment, the fibrous structure to be coated has a dry matter content of at least 60%, such as at least 70%, for example 60 to 80%.

In one embodiment, the fibrous structure to be coated has a dry matter content of at least 60%, such as 60 to 95%.

In one embodiment, said at least a part of a surface to be coated is substantially dry. For example, the topmost layer of the fibrous structure to be coated may be substantially dry, such as dried by heating.

The dry powder to be applied on said surface may comprise pigments and additionally one or more additives, which may be selected from the following groups: resins, binders, and fillers, such as barite, silica, carbonates, silicates, aluminium hydroxide, latexes, nylon, polyethylene, polyester, polypropylene and polyvinyl chloride, and mixtures thereof.

In one embodiment, the coating layer is generated on said surface by spraying. The present invention may enable application of a powder paint coating by direct spraying on a vertical or curved surface.

In some embodiments, the fibrous structure to be coated is placed in the vicinity of or on an article made of a metal material, such as a sheet of metal foil, for the duration of applying the coating layer. In this way the fibrous structure obtains a sufficient electrical charge.

Other means for generating the coating layer may be used, such as preparing a coating film separately by a powder coating method, and thereafter attaching or pressing the ready coating film on a desired surface of the moulded fibrous structure.

The curing or melting or film preparing may comprise contact or non-contact heating, hot-pressing, IR curing or microwave curing or any combination thereof, preferably heating to a temperature of at least 120 °C, for example at least 150 °C.

In one example, the film preparing step comprises a first step of melting the applied dry composition, such as dry powder paint or dry particles, by IR melting and a subsequent second step of finally curing or preparing the film by one or more hot pressing steps.

Preferably the film preparing step comprises or consists of contact heating, such as hot-pressing.

In an embodiment, said film preparing step, such as contact heating, may have a total duration of less than 2 min, such as less than 1 min, optionally divided into several steps.

Pressure may be applied in the curing or melting or film preparing steps, for example in one or more hot pressing steps.

During the film preparing step, such as a hot-pressing step, heat may be applied to the coating layer from either or both sides of the coating. For example, heat may be applied from below, through the fibrous structure, or alternatively from above the coating. Different heating profiles may be applied from each side of the coating.

In the hot-pressing, the temperature is typically higher than room temperature, for example at least 50 °C, such as at least 100 °C, for example in the range 150 to 240 °C, typically on at least one side of the structure to be hot-pressed.

For example, the temperature that is applied from above the coating may be at least 200 °C.

For example, the temperature that is applied from below the coating, through the fibrous structure, may be less than 100 °C.

In the hot-pressing, increased pressure may be applied.

Alternatively or additionally, in the hot-pressing, a sub-atmospheric pressure may be applied, for example a pressure of 60 kPa or less.

The hot-pressing may comprise two or more successive steps of hot-pressing. Said hot-pressing may have a total duration of less than 2 minutes, such as less than 30 seconds, such as less than 20 seconds.

During hot-pressing, heat may be applied from one or both sides of the material to be pressed. In an embodiment, heat is applied only from one side.

For example, the hot-pressing may involve two hot-pressing steps in both of which heat is applied from the same side. Alternatively, the hot-pressing may involve two hot-pressing steps in which heat is applied from different sides.

Hot-pressing may comprise impulse drying.

The coating step may precede all hot-pressing steps. In such a case, the dry matter content of the fibrous structure to be coated may be at least 30%.

The coating step is preferably between two hot-pressing steps. In such a case, the dry matter content of the fibrous structure to be coated may be at least 60%.

The coating step may be after all hot-pressing steps. In such a case, the dry matter content of the fibrous structure to be coated may be at least 80%, such as at least 90%.

In some embodiments, the final coating thickness is less than 100 µm, such as less than 70 µm.

Next, we describe embodiments related to foam forming of the fibrous structure in more detail.

In the present invention, the fibrous structure to be coated or a part of it is obtained by utilizing foam forming.

In some embodiments, the fibrous structure or at least one of its fibrous layers may be obtained by a method comprising the following steps: providing a fibrous slush comprising fibres; refining the fibres of the fibrous slush and/or adding barrier agents to the fibrous slush; turning the fibrous slush to a foamed composition; forming, such as shaping the foamed composition in a mould; dewatering; and hot-pressing.

In the method, a foamed composition comprising fibres, water, air and one or more foaming chemicals is first provided. The foam may further comprise fillers, additives, pigments, binders, strength agents, barrier dispersions and sizing agents.

The foaming chemical, such as a surface-active agent used may be nonionic, anionic, cationic or amphoteric. A suitable amount of surface active agent is approximately 150 to 1000 ppm by weight. Examples of anionic surface active agents are alpha-olefin sulphonates, and of non-ionic, in turn, PEG-6 lauramide. Particular examples include sodium dodecyl sulphate (SDS), Tween20, and mixtures thereof. Tween20 contains at least 40 wt-% lauric acid, the balance primarily consisting of myristic, palmitic, and stearic acids.

Preferably, the foaming chemicals comprise or consist of at least one anionic surfactant, such as SDS. Powder coating may be particularly advantageous in the case of using an anionic surfactant, which may provide a low surface energy to the surface to be coated.

Typically, the bubble size (bubble diameter) in the foam is approximately 10 to 300 µm, for example 20 to 200 µm, usually approximately 20 to 80 µm.

In an embodiment, the bubble size (bubble diameter) in the foam is at least 100 µm, such as 100 to 200 µm.

In one embodiment, a composition suitable for foaming is obtained by mixing fibre slush, which has a consistency of approximately 0.5 to 7% by weight (the amount of fibre in relation to slush weight), with a foam which is formed from water and a surface-active agent and the air content of which is approximately 10 to 90% by volume, for example 20 to 80%, such as 50 to 70% by volume, in which case a foamed fibre slush is generated having a fibre content of approximately 0.1 to 3% by weight.

In one embodiment, a moulded multi-layered fibrous structure is obtained by a method comprising: forming a moulded multi-layered foamed structure from at least one foamed fibrous composition comprising cellulosic fibres, water, air and a foaming agent and optionally also barrier agents; dewatering the structure, preferably by applying a vacuum; and hot-pressing the dewatered structure to obtain the moulded multi-layered fibrous structure. At least one of the fibrous layers of the multi-layered fibrous structure exhibits barrier properties substantially throughout its structure.

In the present context, "forming" refers to the process of giving the foamed composition a shape, such as a three-dimensional shape, in a mould.

In the preferred method, a foamed fibrous composition is fed to a mould. The mould typically comprises a cavity or an inner space defined by mould inner surfaces. In the cavity the fed foamed composition is shaped.

The foamed composition may be fed to the mould to provide an amount of the foamed composition, such as a layer of the foamed composition, onto at least one inner surface of the mould. The layer is typically non-planar and may be understood as a thickness, such as a substantially constant thickness, of the foamed composition lying on the inner surface of the mould and conforming to the shape of said surface.

Typically, the shaping step comprises pressing said fibrous composition in the inner space of the mould by making parts of the mould to approach each other.

The step of forming a multi-layered foamed fibrous structure may comprise feeding a first fibrous composition in a foamed form into the mould, and shaping said first fibrous composition in the mould, to prepare a first foamed fibrous layer. Thereafter, without removing the first fibrous layer from the mould, the process is continued by feeding a second fibrous composition in a foamed form into the mould, and shaping said second fibrous composition in the mould, to prepare a second foamed fibrous layer. As a result, a two-layered moulded foamed fibrous structure is obtained in the mould.

If not otherwise stated, by "parts of the mould" it is referred to such parts of the mould that serve to define the inner space and thus contribute to shaping the foamed fibrous composition.

The second foamed fibrous layer may be fed and thus become located either on top of or alternatively under the first foamed fibrous layer in the mould. Also, said feeding steps may be carried out in either order: either the first layer or the second layer may be formed first into the mould.

It may also be envisaged that the fibrous structure is obtained by using separate moulds for preparing said first and second foamed fibrous layers, and the obtained first and second fibrous layers are joined in said hot-pressing step.

In one embodiment, said feeding into the mould comprises feeding the foamed fibrous composition in a foamed form into an inner space or inner volume of the mould, wherein said inner space is limited by inner surfaces of the mould.

Application of vacuum in the dewatering step is preferably enabled.

The final multi-layered foamed fibrous structure is removed from the mould by opening the mould.

Adjusting the distance between the parts of the mould during feeding and shaping of the foamed compositions is preferably enabled.

Before starting to feed a further, such as a second fibrous composition into the mould, it is typically necessary to enlarge the inner space of the mould by moving the parts of the mould farther from each other. The volume of the inner space may be diminished or enlarged to shape the already-fed foam and, respectively, to make room for the foam to be fed next.

In all adjustments of the volume of the inner space of the mould, some parts of the mould may remain stationary while other parts are moved.

In one example, one or more parts of the mould remain stationary and one or more other parts of the mould move during said approaching or during said enlarging.

For example, the mould may comprise two sub-moulds, such as two halves, that are arranged to face each other and to be movable with regard to each other. The sub-moulds may be approached towards each other to shape the fibrous structure. The sub-moulds may be moved apart from each other to enlarge the inner space or even farther to open the mould and to remove the shaped fibrous structure from the mould.

In one example, the fibrous structure is obtainable by using a mould comprising two parts: a negative mould and a positive mould, which may be arranged to face each other to encase an inner space, also referred to as a moulding space or moulding cavity, between the two parts. The composition to be moulded or shaped is fed into the moulding space and the negative mould and/or the positive mould are approached toward each other to give the composition the shape corresponding to the shape of the moulding space. By 'approaching' it is referred to a process in which the inner space is diminished by means of moving one or both of the positive and negative moulds.

Dewatering of the structure may be carried out by applying vacuum to the inner space of the mould containing the fed foamed composition(s).

The dewatering step precedes the hot-pressing step, which leads to the final fibrous product to be coated, i.e. a fibrous structure in which all layers have been joined to each other. In the hot-pressing, the temperature is typically higher than room temperature, for example at least 50 °C, such as at least 100 °C.

The moulded fibrous structure may be dried for example by means of vacuum, heating, air drying, radiofrequency drying or microwaves drying, or by any combination thereof.

### EXAMPLE

In the following we describe an embodiment in which a fibrous structure to be coated by a dry-coated layer in accordance with some embodiments of the present invention is obtained by foam forming by using a mould consisting of two parts, which are referred to as a pair of moulds.

Any of the features and combinations of features described below can be combined with the embodiments and alternatives described earlier in this application.

The method is for forming a moulded fibrous structure. In the method, a layer is formed of foam. The layer is a part of the final product. The foam, also referred to as 'foamed composition', includes cellulosic and/or lignocellulosic fibres, water, air and one or more foaming chemicals. The foam may also comprise for example fillers and other normal paper-making chemicals, such as strength agents, additives, pigments, colorants and binders.

The layer is formed by a pair of moulds. The moulds may consist of several partial moulds.

In principle, one mould is a negative mould while the other one is a corresponding positive mould. In this way, during the forming the layer obtains a three-dimensional shape. The water and air of the foam must be removed. This is done mainly by decreasing the distance between the moulds and by exerting pressure. The pressure forces air and water out of the foam that was fed between the moulds. The porous surfaces (moulded product surfaces) of the moulds arrange the way out for water, foaming chemicals, and air while the fibres remain and form the layer.

Foam may be fed via one of the moulds. The moulds are a distance apart from each other, and there is a closed cavity for foam. In this way, the feeding of the foam is quick, and the timing may be selected more freely.

Foam may also be fed via both moulds.

In this example, the pair is formed of an upper mould and a lower mould, and the upper mould is movable while the lower mould is arranged stationary. Foam is fed via the lower mould.

Foam can be fed when the pair is a distance apart from each other or when the pair is moving with respect to each other. This shortens the forming cycle. For example, foam may be fed even if the upper mould is moving upwards. On the other hand, the pair may first be moved apart from each other and only thereafter is the foam feeding started.

Feeding the foam through the mould provides a further advantage. Now it is possible to form not only a single layer but multiple layers, via a layer-by-layer process. The formed layer may be removed from inside of the pair after the forming. Alternatively, after the layer has been formed, the pair may be moved apart from each other and more foam may be fed for a further layer, and then the pair is approached towards each other again. Also here, foam may be fed even already when the pair is being moved apart from each other.

In practice, 1 to 10 further layers, advantageously 2 to 4 further layers may be formed. After forming and pressing, the air and unbound water is removed and the semifinished fibrous structure is obtained.

The next stage is hot-pressing for removing the water bound to the fibres. The layers finally stick together in the hot-pressing stage. Several hot-pressing steps may be applied sequentially.

Surprisingly, after the first layer, the further layer may be formed on either side of the first layer. In other words, foam may be fed to either side of the previous layer. For example, one inner layer may be formed first to serve as a body layer, and then one further layer may be formed on both sides of the inner layer to serve as surface layers. Thus, there will be three layers in total.

A multi-layered fibrous structure may be prepared also in another way. The fibrous structure may be combined of multi-layered partial fibrous structures obtained from two separate mould pairs. The formed partial fibrous structures from these two pairs may be combined and hot-pressed to obtain a single fibrous structure. For example, in one pair, one inner layer with one bottom layer may be formed. Simultaneous in the other pair, one inner layer with one top layer may be formed. When combining these layers, a fibrous structure with four layers is formed.

Forming several layers quickly, to constitute a single fibrous structure, is a great benefit. The foam may be exchanged before forming the further layer or layers after the first layer. Foams with different properties may be used in forming one fibrous structure. In this way, the layers may differ from each other. The fibrous structure may include, for example, one or two inner layers formed from one kind of foam. Then there may be at least one outer layer of another kind of foam. Thus, foams may alter in cross-sectional profile of the fibrous structure.

Surprisingly, the fibrous structure may be formed without extra heating. Since the foam has a low water content and contains a lot of air, water may be efficiently removed, and the fibrous structure keeps its form after forming. Simultaneously, the foam stays in shape and energy consumption is low.

The temperature of the foam is maintained in the range 15 to 45 °C, advantageously in the range 25 to 35 °C. If necessary, the foam and/or the moulds may be cooled to keep the temperature stable and low enough.

In such low temperatures, the fibres will still contain some moisture. During the hot-pressing, the moisture is driven out as water and steam, which also provides a smooth surface and contributes to inner bonding to form a solid layered fibrous structure.

Immediately as the pair starts to move apart from each other, foam is fed into the mould inner space. When the pair is approached towards each other again, the feeding stops and water is drained out of the pair. Simultaneously air becomes removed.

Water and air removal by pressing may be aided by vacuum.

Although a single-layer fibrous structure may be formed, the method is advantageous when forming multiple layers.

Foam is made of water, air, fibres and foaming chemical. Foam contains small fractions or particles of the fibres in question. Also, a foaming chemical is used to aid foam generation and to keep the foam in shape.

The fibres may vary extensively as to their origin and composition. For example, wood fibres or vegetable fibres (for example straw, bagasse and bamboo fibres) may be used, but also man-made cellulosic fibres are possible.

In a proper foam, water and fibres and possible additives are evenly distributed on the bubble walls of the foam. The foam is a non-flocculating heterogeneous fibrous raw material in which the air of the bubbles carries the fibres and any other raw materials to the forming process. When using foam, the retention of the fibres is also very high. In practice, more than 99% of the fibres remain in the fibrous structure formed from the thick foam as a carrier medium.

The additives may have different retention properties according to the purpose.

By forming the fibrous structure of several layers, the properties of the structure may be tailored in many ways. For example, the basic structure and the surface properties of the fibrous structure may be formed with different foam compositions. In practice, each layer may have its own process parameters and raw materials. For example, the rigid body of the fibrous structure may be formed from cheaper fibres and then the surface layers from higher-quality fibres. Compared to the known processes using an aqueous fibre slurry, in foam the fibre density is higher. Simultaneously, the amount of water within the bubble walls circulating is also considerably smaller and the water removal in the forming is easy. Foam with small water volumes enables fast process cycles.

The exchange of foam fractions or types for different layers of the fibrous structure may be possible.

The foam may be fed rapidly enough inside the mould space, especially when vacuum is used.

In a proper foam the bubbles are not separated and the fibres are evenly distributed. During the forming, the foam is dispensed or fed into the mould inner space between the two moulds. The volume of the mould inner space may be adjusted according to the layer thickness required.

For example, the forming of the next layer may take place on either side of the previous layer. Also, foam feeding may start already during the moving apart of the pair. This is advantageous since during the moving apart, the mould space is immediately filled with foam without any air being able to enter the space before the foam.

The foam is fed through the mould, into the mould inner space. 'The mould inner space' refers to the space between the pair of moulds.

Also vacuum may be used. Vacuum aids water and air removal. Vacuum may be applied even during foam feeding, but at the latest when the approaching of the pair towards each other is started. During the forming, the mould space diminishes, but not as much as in the actual pressing step after the forming. In addition, it is possible to keep the formed layer under vacuum on the surface (inner surface) of the desired mould to form the further layer on the selected side of the earlier layer.

The forming may be carried out without any heating, to control the optimal foam structure for a uniform formation of the fibrous structure. In practice, the forming is carried out in a substantially constant process temperature, advantageously between 15 to 45 °C. In addition to the pair of moulds, this temperature may also be maintained in the entire foam system to ensure an optimal bubble size or foam quality for high product quality. In this way the life-time of the foam may be extended. Also, it is easier to remove air than steam, and the layer remains unharmed and the process stable. In practice, the foam includes more than 50% air, advantageously 55 to 75% air.

The bubble size of the optimal foam in the forming may be about 10 to 500 µm in diameter, preferably 50 to 150 µm or 100 to 200 µm in diameter.

Surprisingly, the present foam process simultaneously achieves high consistency and good formation compared to known aqueous slurry formation processes. Said water-based processes require a longer heating and dewatering time as the consistency is much lower, and formation is poorer due to flocculation.

The layered fibrous structure is formed as layers on top of each other. In a dewatering step, water is removed from the formed structure, through the mould. The layer structure is bound together at the latest in hot-pressing.

The layered fibrous structure may be formed in an optional layer order. In other words, the forming may start from any of the inner layers or from either of the surface layers.

The bonding of the layers to each other may be started by dewatering through the layer interfaces.

Layer bonding continues or, at the latest, occurs in the subsequent hot-pressing step in which the heat and the steam generated in the fibrous structure and the steam driven through the layers also strengthen the bonding of the layers to each other.

Layering may be carried out with the same fibres, but different additives may be used in different layers.

The hot-pressing may comprise a plurality of separate hot-pressing stages. Hot air or radiation heating or impulse drying may be applied to hot-press and/or dry the fibrous structure.

After the hot-pressing step, an optional additional drying step in elevated temperature may follow.

The method includes generating a foam from fibres, water, air and a foaming chemical. The properties of the foam may vary as earlier described. In addition, the method includes using a pair of moulds with mutual distance variability. In other words, the distance between the moulds may be varied. In practice, after feeding the foam, the moulds are pressed together for removing water and air, thereby forming the fibrous structure.

In addition, the method further includes feeding foam between the moulds to form a layer. A single layer may constitute the fibrous structure, but advantageously the fibrous structure may include several layers. Foam may be fed even when the moulds are a distance apart from each other and also upon moving the pair relative to each other. This shortens the process cycle and gives more options in tailoring the process and the end product.

The method involves creating a closed mould space, and feeding a volume of foam into the mould space, which is like a closed cavity. The moulded fibrous structure is removed from the pair and transferred to the hot-pressing.

Advantageously, the pair includes an upper mould and a lower mould. The upper mould is movable while the lower mould is arranged stationary, or alternatively the lower mould is movable while the upper mould is arranged stationary, or still alternatively both moulds are movable.

With the closed mould space, the moulds may be a distance apart from each other during the forming. After being moved apart, the pair gives space for further foam.

In practice, the distance between the moulds is 10 to 100 mm, preferably 20 to 80 mm. In an embodiment, the distance between the moulds is at least 5 mm. Generally, the thicker the layer, the larger the distance. The flow rate of the foam keeps moderate. In practice, the flow rate is 1 to 3 meters per second.

As mentioned earlier, several identical fibrous structures may be obtained in parallel by a forming method in which each mould of the pair comprises several identical partial moulds or sub-moulds.

Each partial or sub-mould is evenly filled with foam. Thus the moulded fibrous structures are uniform, and the process is quick.

After the mould space is filled with foam, water and air are removed by pressing. Water and air may permeate through the mould surface while the fibres accumulate on the mould surface. Water removal may be aided with vacuum. Water removal may also be aided by overpressure exerted by the opposing mould.

### INDUSTRIAL APPLICABILITY

The present invention is industrially applicable at least in the manufacturing of powder painted moulded fibrous products.

### REFERENCE SIGNS

- 1: first fibrous layer
- 2: second fibrous layer
- 3: inner fibrous layer
- 4: intermediate layer
- 5: coating

## Claims

1. A product comprising:
- a fibrous structure comprising a cellulosic and/or lignocellulosic fibrous material and obtained by a moulding process; and
- a coating, such as at least one coating layer, on at least one surface of the fibrous structure,
wherein the coating has been obtained by a powder coating process,
wherein the fibrous structure to be coated or a part of it has been obtained by utilizing foam forming,
wherein the density of the fibrous structure to be coated is in the range 300 to 1 000 kg/m³, calculated as dry solids weight per volume,
wherein the surface smoothness of the fibrous structure to be coated is in the range 50 to 3000 ml/min, measured by ISO 8791-2 Bendtsen method.

2. The product according to claim 1, wherein the coating forms an uppermost layer or a lowermost layer of the product.

3. The product according to any of the preceding claims, wherein the product comprises at least two coating layers which are located on different surfaces of the fibrous structure, such as on opposite sides of a planar fibrous structure.

4. The product according to any of the preceding claims, wherein the coating is a non-fibrous coating and comprises or consists of a thermoplastic polymer material or a thermoset polymer material, such as polyolefin, polyester, polyethylene terephthalate (PET), polyhydroxyalkanoate or polylactic acid.

5. The product according to any of the preceding claims, wherein the coating comprises at least 50 wt-%, such as at least 80 wt-%, such as at least 90 wt-% of a thermoplastic polymer material or a thermoset polymer material.

6. The product according to any of the preceding claims, wherein the product has a dry grammage in the range of 5 to 900 g/m², for example in the range of 100 to 800 g/m², such as in the range of 200 to 600 g/m².

7. The product according to any of the preceding claims, wherein the coating has a dry grammage in the range of 2 to 80 g/m², for example 10 to 35 g/m², and
wherein the thickness of the coating is at least 1 µm, such as in the range 2 to 50 µm, for example 5 to 30 µm.

8. The product according to any of the preceding claims, wherein the fibrous structure is a multi-layered fibrous structure and comprises at least a first fibrous layer and a second fibrous layer, each comprising a cellulosic and/or lignocellulosic fibrous material.

9. The product according to any of the preceding claims, further comprising between the first and the second fibrous layers one or more inner fibrous layers, each comprising a cellulosic and/or lignocellulosic fibrous material, preferably comprising mechanical pulp, such as chemithermomechanical pulp (CTMP) or bleached chemithermomechanical pulp (BCTMP) and/or broke.

10. The product according to any of the preceding claims, wherein the entire fibrous structure has been obtained by foam forming.

11. The product according to any of the preceding claims,
wherein the fibrous structure is a multi-layered fibrous structure comprising at least two fibrous layers, and
wherein all fibrous layers of the fibrous structure have been obtained by a foam forming method in a mould.

12. Use of the product according to any of the preceding claims as a packaging or container for food, such as dairy, fish or meat products, or as a packaging for medicines or cosmetics, or as a part thereof, or for storing, handling, preparing or cooking food.

13. A method comprising:
- providing at least one fibrous composition comprising cellulosic and/or lignocellulosic fibres and water;
- in a mould, forming a fibrous structure from said at least one fibrous composition;
- applying a coating, such as at least one coating layer, on at least a part of a surface of the moulded fibrous structure by a powder coating process,
wherein said forming comprises foam forming,
wherein the density of the fibrous structure to be coated is in the range 300 to 1 000 kg/m³, calculated as dry solids weight per volume,
wherein the surface smoothness of the fibrous structure to be coated is in the range 50 to 3000 ml/min, measured by ISO 8791-2 Bendtsen method.

14. The method according to claim 13, wherein said forming step comprises forming a three-dimensional fibrous structure from said at least one fibrous composition by using a three-dimensional mould.

15. The method according to claim 13 or claim 14, wherein said powder coating process comprises electrostatically applying a dry powder on said surface of the fibrous structure, and curing or melting the applied powder, preferably by contact or non-contact heating and/or hot-pressing, to form a film.

16. The method according to any of claims 13 to 15, wherein the fibrous structure to be coated has a dry matter content of at least 90%, such as 90 to 96%.

17. The method according to any of claims 13 to 16, further comprising after said forming step and before applying the coating:
- dewatering the structure;
- hot-pressing the dewatered structure, to obtain the moulded three-dimensional fibrous structure,
wherein said hot-pressing produces a surface that is directly suitable for being powder coated, for example powder painted.

18. The method according to any of claims 13 to 17,
wherein the fibrous structure to be coated has a dry matter content of at least 60%, and
wherein after applying the coating, the coated structure is hot-pressed, such as hot-pressed for a second time.

19. The method according to any of claims 13 to 18,
wherein the density of the fibrous structure to be coated is at least 700 kg/m³.

20. The method according to any of claims 13 to 19,
wherein the fibrous structure is a multi-layered fibrous structure comprising at least two fibrous layers, and
wherein each fibrous layer of the fibrous structure is obtained by foam forming from a respective fibrous composition in a mould.

## Patentansprüche

1. Produkt, umfassend:
- eine Faserstruktur, umfassend ein cellulosehaltiges und/oder lignocellulosehaltiges Fasermaterial und erhalten durch einen Formungsprozess; und
- eine Beschichtung, beispielsweise mindestens eine Beschichtungslage, auf mindestens einer Oberfläche der Faserstruktur,
wobei die Beschichtung durch einen Pulverbeschichtungsprozess erhalten worden ist,
wobei die zu beschichtende Faserstruktur oder ein Teil davon durch Benutzen von Schaumbildung erhalten worden ist,
wobei die Dichte der zu beschichtenden Faserstruktur im Bereich von 300 bis 1000 kg/m³, berechnet als Trockenmasse pro Volumen, liegt,
wobei die Oberflächenglätte der zu beschichtenden Faserstruktur im Bereich von 50 bis 3000 ml/min, gemessen nach dem Bendtsen-Verfahren gemäß ISO 8791-2, liegt.

2. Produkt nach Anspruch 1, wobei die Beschichtung eine oberste Lage oder eine unterste Lage des Produkts bildet.

3. Produkt nach einem der vorstehenden Ansprüche, wobei das Produkt mindestens zwei Beschichtungslagen umfasst, die sich auf unterschiedlichen Oberflächen der Faserstruktur, beispielsweise auf gegenüberliegenden Seiten einer planaren Faserstruktur, befinden.

4. Produkt nach einem der vorstehenden Ansprüche, wobei die Beschichtung eine nichtfaserige Beschichtung ist und ein thermoplastisches Polymermaterial oder ein duroplastisches Polymermaterial, wie Polyolefin, Polyester, Polyethylenterephthalat (PET), Polyhydroxyalkanoat oder Polymilchsäure, umfasst oder daraus besteht.

5. Produkt nach einem der vorstehenden Ansprüche, wobei die Beschichtung mindestens 50 Gew.-%, wie zum Beispiel mindestens 80 Gew.-%, wie zum Beispiel mindestens 90 Gew.-%, eines thermoplastischen Polymermaterials oder eines duroplastischen Polymermaterials umfasst.

6. Produkt nach einem der vorstehenden Ansprüche, wobei das Produkt eine Trockengrammatur im Bereich von 5 bis 900 g/m², beispielsweise im Bereich von 100 bis 800 g/m², beispielsweise im Bereich von 200 bis 600 g/m², aufweist.

7. Produkt nach einem der vorstehenden Ansprüche, wobei die Beschichtung eine Trockengrammatur im Bereich von 2 bis 80 g/m², zum Beispiel 10 bis 35 g/m², aufweist und
wobei die Dicke der Beschichtung mindestens 1 µm, beispielsweise im Bereich von 2 bis 50 µm, zum Beispiel 5 bis 30 µm, beträgt.

8. Produkt nach einem der vorstehenden Ansprüche, wobei die Faserstruktur eine mehrlagige Faserstruktur ist und mindestens eine erste Faserlage und eine zweite Faserlage umfasst, die jeweils ein cellulosehaltiges und/oder lignocellulosehaltiges Fasermaterial umfassen.

9. Produkt nach einem der vorstehenden Ansprüche, ferner umfassend zwischen der ersten und der zweiten Faserlage eine oder mehrere innere Faserlagen, die jeweils ein cellulosehaltiges und/oder lignocellulosehaltiges Fasermaterial umfassen, vorzugsweise Holzstoff, wie beispielsweise chemo-thermischen Holzstoff (CTMP) oder gebleichtem chemo-thermischen Holzstoff (BCTMP) und/oder Fertigungsausschuss, umfassen.

10. Produkt nach einem der vorstehenden Ansprüche, wobei die gesamte Faserstruktur durch Schaumbildung erhalten worden ist.

11. Produkt nach einem der vorstehenden Ansprüche,
wobei die Faserstruktur eine mehrlagige Faserstruktur ist, die mindestens zwei Faserlagen umfasst, und
wobei alle Faserlagen der Faserstruktur durch ein Schaumbildungsverfahren in einer Form erhalten worden sind.

12. Verwendung des Produkts nach einem der vorstehenden Ansprüche als Verpackung oder Behälter für Nahrungsmittel, wie beispielsweise Milch-, Fisch- oder Fleischprodukte, oder als Verpackung für Arzneimittel oder Kosmetika oder als Teil davon oder zum Lagern, Handhaben, Zubereiten oder Kochen von Nahrungsmitteln.

13. Verfahren, umfassend:
- Bereitstellen mindestens einer Faserzusammensetzung, die cellulosehaltige und/oder lignocellulosehaltiges Fasern und Wasser umfasst;
- in einer Form, Bilden einer Faserstruktur aus der mindestens einen Faserzusammensetzung;
- Aufbringen einer Beschichtung, beispielsweise mindestens einer Beschichtungslage, auf mindestens einen Teil einer Oberfläche der geformten Faserstruktur durch einen Pulverbeschichtungsprozess,
wobei das Formen Schaumbilden umfasst,
wobei die Dichte der zu beschichtenden Faserstruktur im Bereich von 300 bis 1000 kg/m³, berechnet als Trockenmasse pro Volumen, liegt,
wobei die Oberflächenglätte der zu beschichtenden Faserstruktur im Bereich von 50 bis 3000 ml/min, gemessen nach dem Bendtsen-Verfahren gemäß ISO 8791-2, liegt.

14. Verfahren nach Anspruch 13, wobei der Formungsschritt das Bilden einer dreidimensionalen Faserstruktur aus der mindestens einen Faserzusammensetzung durch Verwenden einer dreidimensionalen Form umfasst.

15. Verfahren nach Anspruch 13 oder 14, wobei der Pulverbeschichtungsprozess elektrostatisches Aufbringen eines trockenen Pulvers auf die Oberfläche der Faserstruktur und Aushärten oder Schmelzen des aufgebrachten Pulvers, vorzugsweise durch Kontakt- oder berührungslose Erwärmung und/oder Heißpressen, um einen Film zu bilden, umfasst.

16. Verfahren nach einem der Ansprüche 13 bis 15, wobei die zu beschichtende Faserstruktur einen Trockensubstanzgehalt von mindestens 90 %, wie beispielsweise 90 bis 96 %, aufweist.

17. Verfahren nach einem der Ansprüche 13 bis 16, ferner umfassend, nach dem Formungsschritt und vor Aufbringen der Beschichtung:
- Entwässern der Struktur;
- Heißpressen der entwässerten Struktur, um die geformte dreidimensionale Faserstruktur zu erhalten,
wobei das Heißpressen eine Oberfläche erzeugt, die sich direkt eignet, um pulverbeschichtet, beispielsweise pulverlackiert, zu werden.

18. Verfahren nach einem der Ansprüche 13 bis 17,
wobei die zu beschichtende Faserstruktur einen Trockenmassegehalt von mindestens 60 % aufweist und
wobei die beschichtete Struktur, nach Aufbringen der Beschichtung, heißgepresst wird, beispielsweise ein zweites Mal heißgepresst wird.

19. Verfahren nach einem der Ansprüche 13 bis 18,
wobei die Dichte der zu beschichtenden Faserstruktur mindestens 700 kg/m³ beträgt.

20. Verfahren nach einem der Ansprüche 13 bis 19,
wobei die Faserstruktur eine mehrlagige Faserstruktur ist, die mindestens zwei Faserlagen umfasst, und
wobei jede Faserlage der Faserstruktur durch Schaumbilden aus einer jeweiligen Faserzusammensetzung in einer Form erhalten wird.

## Revendications

1. Produit comprenant :
- une structure fibreuse comprenant un matériau fibreux cellulosique et/ou lignocellulosique obtenu par un processus de moulage ; et
- un revêtement, tel qu'au moins une couche de revêtement, sur au moins une surface de la structure fibreuse,
dans lequel le revêtement a été obtenu par un processus de poudrage,
dans lequel la structure fibreuse à recouvrir ou une partie de celle-ci a été obtenue en utilisant la formation de mousse,
dans lequel la densité de la structure fibreuse à recouvrir se situe dans la plage allant de 300 à 1000 kg/m³, calculée en poids de matières sèches par volume,
dans lequel le lissé de surface de la structure fibreuse à recouvrir se situe dans la plage allant de 50 à 3 000 ml/min, mesuré par le procédé Bendtsen selon la norme ISO 8791-2.

2. Produit selon la revendication 1, dans lequel le revêtement forme une couche supérieure ou une couche inférieure du produit.

3. Produit selon l'une quelconque des revendications précédentes, dans lequel le produit comprend au moins deux couches de revêtement situées sur différentes surfaces de la structure fibreuse, telles que les côtés opposés d'une structure fibreuse plane.

4. Produit selon l'une quelconque des revendications précédentes, dans lequel le revêtement est un revêtement non fibreux et comprend ou consiste en un matériau polymère thermoplastique ou un matériau polymère thermodurcissable, tel que la polyoléfine, le polyester, le polyéthylène téréphtalate (PET), le polyhydroxyalcanoate ou l'acide polylactique.

5. Produit selon l'une quelconque des revendications précédentes, dans lequel le revêtement comprend au moins 50 % en poids, tel qu'au moins 80 %, tel qu'au moins 90 % en poids d'un matériau polymère thermoplastique ou d'un matériau polymère thermodurcissable.

6. Produit selon l'une quelconque des revendications précédentes, dans lequel le produit présente un grammage sec situé dans la plage allant de 5 à 900 g/m², par exemple dans la plage allant de 100 à 800 g/m², tel que situé dans la plage allant de 200 à 600 g/m².

7. Produit selon l'une quelconque des revendications précédentes, dans lequel le revêtement présente un grammage sec situé dans la plage allant de 2 à 80 g/m², par exemple de 10 à 35 g/m²et
dans lequel l'épaisseur du revêtement est d'au moins 1 µm, telle que située dans la plage allant de 2 à 50 µm, par exemple de 5 à 30 µm.

8. Produit selon l'une quelconque des revendications précédentes, dans lequel la structure fibreuse est une structure fibreuse multicouche et comprend au moins une première couche fibreuse et une seconde couche fibreuse, chacune comprenant un matériau fibreux cellulosique et/ou lignocellulosique.

9. Produit selon l'une quelconque des revendications précédentes, comprenant en outre, entre les première et seconde couches fibreuses, une ou plusieurs couches fibreuses internes, chacune comprenant un matériau fibreux cellulosique et/ou lignocellulosique, comprenant de préférence une pâte mécanique, telle qu'une pâte chimico-thermomécanique (CTMP) ou une pâte chimico-thermomécanique blanchie (BCTMP) et/ou des cassés de fabrication.

10. Produit selon l'une quelconque des revendications précédentes, dans lequel l'ensemble de la structure fibreuse a été obtenue par formation de mousse.

11. Produit selon l'une quelconque des revendications précédentes,
dans lequel la structure fibreuse est une structure fibreuse multicouche comprenant au moins deux couches fibreuses, et
dans lequel toutes les couches fibreuses de la structure fibreuse ont été obtenues par un procédé de formation de mousse dans un moule.

12. Utilisation du produit conformément à l'une quelconque des revendications précédentes comme emballage ou récipient pour aliments, tels que des produits laitiers, du poisson ou de la viande, ou comme emballage pour médicaments ou cosmétiques, ou comme partie de ceux-ci, ou pour le stockage, la manipulation, la préparation ou la cuisson d'aliments.

13. Procédé comprenant :
- la fourniture d'au moins une composition fibreuse comprenant des fibres cellulosiques et/ou lignocellulosiques et de l'eau ;
- dans un moule, la formation d'une structure fibreuse à partir de ladite au moins une composition fibreuse ;
- l'application d'un revêtement, tel qu'au moins une couche de revêtement, sur au moins une partie d'une surface de la structure fibreuse moulée par un processus de poudrage,
dans lequel ladite formation comprend la formation de mousse,
dans lequel la densité de la structure fibreuse à recouvrir se situe dans la plage allant de 300 à 1000 kg/m³, calculée en poids de matières sèches par volume,
dans lequel le lissé de surface de la structure fibreuse à recouvrir se situe dans la plage allant de 50 à 3 000 ml/min, mesuré par le procédé Bendtsen selon la norme ISO 8791-2.

14. Procédé selon la revendication 13, dans lequel ladite étape de formation comprend la formation d'une structure fibreuse tridimensionnelle à partir d'au moins une composition fibreuse à l'aide d'un moule tridimensionnel.

15. Procédé selon la revendication 13 ou la revendication 14, dans lequel ledit processus de poudrage comprend l'application électrostatique d'une poudre sèche sur ladite surface de la structure fibreuse, et le durcissement ou la fusion de la poudre appliquée, de préférence par chauffage par contact ou sans contact et/ou par pressage à chaud, pour former un film.

16. Procédé selon l'une quelconque des revendications 13 à 15, dans lequel la structure fibreuse à recouvrir présente une teneur en matière sèche d'au moins 90 %, telle que de 90 à 96 %.

17. Procédé selon l'une quelconque des revendications 13 à 16, comprenant en outre, après ladite étape de formation et avant l'application du revêtement :
- la déshydratation de la structure ;
- le pressage à chaud de la structure déshydratée pour obtenir la structure fibreuse tridimensionnelle moulée,
dans lequel ledit pressage à chaud produit une surface directement conçue pour être recouverte de poudre, par exemple peinte en poudre.

18. Procédé selon l'une quelconque des revendications 13 à 17,
dans lequel la structure fibreuse à recouvrir présente une teneur en matière sèche d'au moins 60 %, et
dans lequel après l'application du revêtement, la structure revêtue est pressée à chaud, telle que pressée à chaud une seconde fois.

19. Procédé selon l'une quelconque des revendications 13 à 18,
dans lequel la densité de la structure fibreuse à recouvrir est d'au moins 700 kg/m³.

20. Procédé selon l'une quelconque des revendications 13 à 19,
dans lequel la structure fibreuse est une structure fibreuse multicouche comprenant au moins deux couches fibreuses, et
dans lequel chaque couche fibreuse de la structure fibreuse est obtenue par formation de mousse à partir d'une composition fibreuse respective dans un moule.
